# EUROPÄISCHE PATENTANMELDUNG

(11) **EP 4 020 062 A1**
(43) Veröffentlichungstag der Anmeldung: **29.06.2022**
(21) Anmeldenummer: 21210097.8
(22) Anmeldetag: 24.11.2021
(51) Int. Cl.: G02C 5/22

(54) **FEDERSCHANIER FÜR EINE BRILLE**

(30) Priorität: 22.12.2020 AT 5027120 U
(71) Anmelder: REDTENBACHER Präzisionsteile Ges.m.b.H., 4644 Scharnstein (AT)
(72) Erfinder: Almhofer, Daniel, 4643 Pettenbach (AT)
(74) Vertreter: Hübscher & Partner Patentanwälte GmbH

(57) **Zusammenfassung**

Es wird ein Federscharnier für eine Brille mit einem an einem Brillenbügel (1) befestigbaren, gegenüber dem Brillenbügel (1) offenen Gehäuse (2) und mit einem in einer Gehäuseführung zwischen zwei parallelen Führungswänden (3) verschiebbar gelagerten, im Querschnitt rechtwinkeligen Gleitstück (4) beschrieben, das mit einem aus dem Gehäuse (2) vorstehenden Ansatz einen mittleren Scharnierlappen (5) und auf der gegenüberliegenden Seite einen eine Schraubenfeder (8) aufnehmenden Dorn (7) bildet, die einerseits am Dornende und anderseits an einer Gehäuseschulter (11) zwischen der Gehäuseführung und einer erweiterten Gehäusekammer (10) für die Schraubenfeder (8) abgestützt ist, wobei das Gleitstück (4) mit einem den Ausziehweg begrenzenden Ausziehanschlag (12) zusammenwirkt. Um vorteilhafte Konstruktionsbedingungen zu schaffen, wird vorgeschlagen, dass das Gleitstück (4) auf der der offenen Gehäuseseite gegenüberliegenden Längsseite den in eine Gehäusenut (13) eingreifenden und mit der Stirnseite der Gehäusenut als Gegenanschlag (14) zusammenwirkenden Ausziehanschlag (12) aufweist.

## Beschreibung

Die Erfindung bezieht sich auf ein Federscharnier für eine Brille mit einem an einem Brillenbügel befestigbaren, gegenüber dem Brillenbügel offenen Gehäuse und mit einem in einer Gehäuseführung zwischen zwei parallelen Führungswänden verschiebbar gelagerten, im Querschnitt rechtwinkeligen Gleitstück, das mit einem aus dem Gehäuse vorstehenden Ansatz einen mittleren Scharnierlappen und auf der gegenüberliegenden Seite einen eine Schraubenfeder aufnehmenden Dorn bildet, die einerseits am Dornende und anderseits an einer Gehäuseschulter zwischen der Gehäuseführung und einer erweiterten Gehäusekammer für die Schraubenfeder abgestützt ist, wobei das Gleitstück mit einem den Ausziehweg begrenzenden Ausziehanschlag zusammenwirkt.

Bei Federscharnieren für Brillen mit in einem Gehäuse gegen Federkraft verschiebbaren Gleitstücken, die mit ihrem aus dem Gehäuse vorstehenden Ende einen Scharnierteil bilden, muss die das Gleitstück im Einziehsinn beaufschlagende Feder gegenüber dem Gehäuse abgestützt werden. Hierfür ist üblicherweise ein Widerlager vorgesehen, das bei gegenüber dem Brillenbügel offenen Gehäusen Teil einer Montageeinheit ist, die das Gleitstück, eine auf einem gehäuseseitigen Dorn des Gleitstücks vorgesehene, am Dornende abgestützte Schraubenfeder und das auf dem Dorn zwischen dem Gleitstück und der Schraubenfeder verschiebbar angeordnete Widerlager umfasst. Diese Montageeinheit kann von der offenen Gehäuseseite her in das Gehäuse eingesetzt werden, wobei das Gleitstück zwischen zwei parallele Führungswände des Gehäuses eingreift und das Widerlager in einer Gehäuseausnehmung verschiebefest aufgenommen wird (EP 1 114 352 B1). Das Gehäuse mit der eingesetzten Montageeinheit kann dann mit der offenen Gehäuseseite auf einen Brillenbügel aufgesetzt und mit diesem vorzugsweise durch ein Schweißen verbunden werden. Nachteilig ist allerdings, dass der Ausziehweg des Gleitstücks durch die Blocklänge der Schraubenfeder bestimmt wird, was nicht nur erhebliche Fertigungstoleranzen, sondern auch die Gefahr einer Federüberlastung mit sich bringt, wenn die Feder öfter bis auf ihre Blocklänge zusammengedrückt wird.

Aus der WO 99/09450 A1 ist es darüber hinaus bekannt, auf ein auf dem Dorn der Montageeinheit zwischen Gleitstück und Schraubenfeder vorgesehenes Widerlager zu verzichten und als Widerlager eine Gehäuseschulter zu nützen, die sich zwischen der Gehäuseführung für das Gleitstück und einer erweiterten Gehäusekammer für die Schraubenfeder ergibt. Außerdem kann auf der dem Bügel zugekehrten Längsseite des Gleitstücks eine den Schiebeweg des Gleitstücks bestimmende Ausnehmung vorgesehen sein, in die ein dem Brillenbügel zugeordneter Anschlagansatz eingreift, sodass das Gleitstück innerhalb der Gehäuseführung nur verschoben werden kann, bis der Anschlagansatz an einem der beiden Enden der Ausnehmung des Gleitstücks anschlägt. Mit dieser Maßnahme kann zwar ein Zusammendrücken der Schraubenfeder auf ihre Blocklänge verhindert werden, doch muss mit einer erheblichen Fertigungstoleranz gerechnet werden, weil das mit dem Brillenbügel zu verbindende Gehäuse zusätzlich gegenüber dem mit dem Gleitstück zusammenwirkende Anschlagansatz ausgerichtet werden muss.

Der Erfindung liegt somit die Aufgabe zugrunde, ein Federscharnier für eine Brille mit einem gegenüber dem Brillenbügel offenen Gehäuse so auszugestalten, dass nicht nur ein Zusammendrücken der Schraubenfeder auf Blocklänge beim Ausziehen des Gleitstücks aus dem Gehäuse unterbunden wird, sondern auch vergleichsweise enge Fertigungstoleranzen bei einfachen Montagebedingungen eingehalten werden können.

Ausgehend von einem Federscharnier der eingangs geschilderten Art löst die Erfindung die gestellte Aufgabe dadurch, dass das Gleitstück auf der der offenen Gehäuseseite gegenüberliegenden Längsseite den in eine Gehäusenut eingreifenden und mit der Stirnseite der Gehäusenut als Gegenanschlag zusammenwirkenden Ausziehanschlag aufweist.

Da der Gegenanschlag für den Ausziehanschlag, der auf der der offenen Gehäuseseite gegenüberliegenden Längsseite des Gleitstücks angeordnet ist, durch das Gehäuse gebildet wird, ergibt sich aufgrund der genauen Führung des Gleitstücks im Gehäuse eine vorteilhafte konstruktive Zuordnung zwischen dem Ausziehanschlag des Gleitstücks und dem Gegenanschlag des Gehäuses, sodass mit herkömmlichen Fertigungsverfahren enge Fertigungstoleranzen eingehalten werden können. Es ist ja lediglich auf der der offenen Gehäuseseite gegenüberliegenden Seite des Gehäuses im Erstreckungsbereich der Gehäuseführung für das Gleitstück eine Gehäusenut vorzusehen, in die der Ausziehanschlag des Gleitstücks eingreift, sodass beim Ausziehen des Gleitstücks aus dem Gehäuse gegen die Rückstellkraft der Schraubenfeder der Ausziehanschlag an die Stirnseite der Gehäusenut anschlägt, bevor die Schraubenfeder auf Blocklänge zusammengedrückt wird. Die maßgebliche Führung des Gleitstücks zwischen den parallelen Führungswänden des Gehäuses bleibt von dieser Begrenzung des Ausziehwegs des Gleitstücks unberührt, zumal der Nutgrund der Gehäusenut als Gleitführung für den Ausziehwiderstand des Gleitstücks genützt werden kann. Die bei der Befestigung des Gehäuses an einem Brillenbügel unvermeidbaren Fertigungstoleranzen haben keinen Einfluss auf den anschlagbegrenzten Ausziehweg des Gleitstücks aus dem Gehäuse.

Ist der Ausziehanschlag am dornseitigen Ende des Gleitstücks vorgesehen, so können vergleichsweise kurze Baulängen für das Federscharnier sichergestellt werden.

Um einen vollflächigen Anschlag zwischen dem Ausziehanschlag des Gleitstücks und dem Gegenanschlag des Gehäuses mit einfachen Fertigungsmitteln zu ermöglichen, können die parallelen Führungsflächen der Gehäuseführung durch eine Quernut unterbrochen sein, die den stirnseitigen Gegenanschlag der Gehäusenut bildet. Die Unterbrechung der Führungsflächen quer zur Verschieberichtung des Gleitstücks verringert außerdem die Gleitreibung zwischen dem Gleitstück und den Führungsflächen, ohne die Führung zu beeinträchtigen.

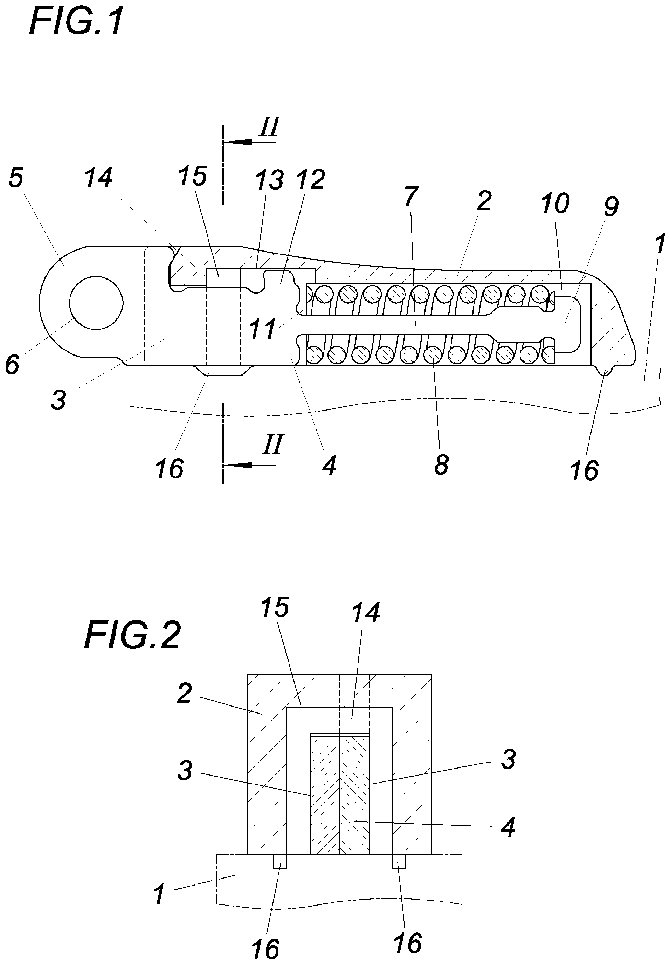

In der Zeichnung ist der Erfindungsgegenstand beispielsweise dargestellt. Es zeigen
- Fig. 1: ein erfindungsgemäßes Federscharnier in einem Längsschnitt,
- Fig. 2: einen schnitt nach der Linie II-II der Fig. 1 in einem größeren Maßstab,
- Fig. 3: eine der Fig. 1 entsprechende Darstellung des Federscharniers, jedoch in der ausgezogenen Anschlagstellung und
- Fig. 4: das Gehäuse in einer Ansicht auf die dem Brillenbügel zugekehrte offene Gehäuseseite.

Ein erfindungsgemäßes Federscharnier weist ein gegenüber einem strichpunktiert angedeuteten Brillenbügel 1 offenes Gehäuse 2 auf, das zwischen zwei parallelen Führungswänden 3 eine Gehäuseführung für ein im Querschnitt rechtwinkeliges Gleitstück 4 bildet. Dieses beispielsweise aus zwei gestanzten Blechteilen gefügte Gleitstück 4 formt an seinem über das Gehäuse vorstehenden Ende einen mittleren Scharnierlappen 5 mit einem Lagerauge 6 zur Aufnahme einer Gelenkachse, die den mittleren Scharnierlappen 5 des dem Gehäuse 2 zugeordneten Scharnierteils mit den diesen Scharnierlappen 5 umgreifenden Scharnierlappen des anderen gabelförmigen Scharnierteils gelenkig verbindet.

Auf der dem Scharnierlappen 5 gegenüberliegenden Seite läuft das Gleitstück 4 in einen Dorn 7 aus, der eine Schraubenfeder 8 aufnimmt, die sich an einem Stützanschlag 9 am Dornende abstützt und von einer gegenüber der Gestellführung zwischen den beiden Führungswänden 3 erweiterten Gehäusekammer 10 aufgenommen wird. Die gehäuseseitige Abstützung der Schraubenfeder 8 erfolgt an einer Gehäuseschulter 11 zwischen der Gehäuseführung und der erweiterten Gehäusekammer 10. Da die Schraubenfeder 8 zur Montage vom freien Dornende aus auf den Dorn 7 aufgeschoben werden muss, kann der Stützanschlag 9 am Dornende erst nach dem Aufschieben der Schraubenfeder 8 auf den Dorn 7 angebracht werden, z. B. durch ein das Dornende verbreiterndes Quetschen.

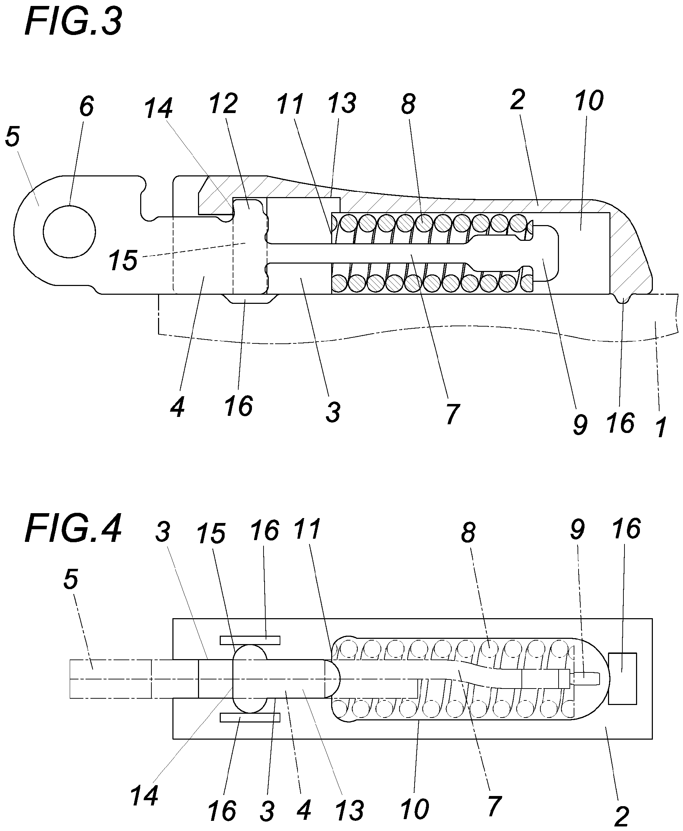

Ohne zusätzliche Vorkehrungen würde der Ausziehweg des Gleitstücks 4 aus der Gehäuseführung durch die Blocklänge der Schraubenfeder 8 begrenzt werden. Um die dadurch bedingten Federbelastungen zu vermeiden, ist das Gleitstück 4 auf der der offenen Gehäuseseite gegenüberliegenden Längsseite mit einem Ausziehanschlag 12 versehen, der in eine zur Gestellführung parallele Gehäusenut 13 eingreift und mit der Stirnseite dieser Gehäusenut 13 als Gegenanschlag 14 zusammenwirkt, wie dies der Fig. 3 entnommen werden kann, die die anschlagbegrenzte Ausziehstellung des Gleitstücks 4 zeigt. Mithilfe des an den Gegenanschlag 14 des Gehäuses 2 anschlagenden Ausziehanschlags 12 kann somit der Ausziehweg begrenzt werden, bevor die Schraubenfeder 8 auf Blocklänge zusammengedrückt wird. Um bei einem vorgegebenen Ausziehweg die Baulänge des Federscharniers kleinhalten zu können, wird der Ausziehanschlag 12 vorteilhaft am dornseitigen Ende des Gleitstücks 4 vorgesehen.

Damit der Gegenanschlag 14 mit geringen Fertigungstoleranzen hergestellt werden kann, kann der Gegenanschlag 14 durch die Nutwand einer die parallelen Führungsflächen 3 der Gehäuseführung unterbrechenden Quernut 15 gebildet werden. Die Unterbrechung der Führungsflächen 3 durch die Quernut 15 hat den zusätzlichen Vorteil einer Gleitreibungsverringerung für das zwischen den Führungsflächen 3 geführte Gleitstück 4, ohne die Gleitstückführung zu beeinträchtigen.

Da das Gleitstück 4 mit der vormontierten Schraubenfeder 8 eine Montageeinheit bildet, kann diese Montageeinheit von der offenen Gehäuseseite her in das Gehäuse 2 eingesetzt werden, bevor das Gehäuse 2 mit dem Brillenbügel 1 verbunden wird. Diese Verbindung erfolgt üblicherweise durch ein Schweißen, wofür das Gehäuse 2 mit Schweißansätzen 16 auf der dem Brillenbügel 1 zugekehrten Stirnseite versehen ist. Werden die Schweißansätze im Bereich der Gestellführung im Anschluss an die Quernut 15 angeordnet, so kann die Quernut 15 in ihren Endbereichen Schweißmaterial aufnehmen, das sonst unter Umständen die Führung des Gleitstücks 4 zwischen den Führungswänden 3 beeinträchtigen könnte.

## Patentansprüche

1. Federscharnier für eine Brille mit einem an einem Brillenbügel (1) befestigbaren, gegenüber dem Brillenbügel (1) offenen Gehäuse (2) und mit einem in einer Gehäuseführung zwischen zwei parallelen Führungswänden (3) verschiebbar gelagerten, im Querschnitt rechtwinkeligen Gleitstück (4), das mit einem aus dem Gehäuse (2) vorstehenden Ansatz einen mittleren Scharnierlappen (5) und auf der gegenüberliegenden Seite einen eine Schraubenfeder (8) aufnehmenden Dorn (7) bildet, die einerseits am Dornende und anderseits an einer Gehäuseschulter (11) zwischen der Gehäuseführung und einer erweiterten Gehäusekammer (10) für die Schraubenfeder (8) abgestützt ist, wobei das Gleitstück (4) mit einem den Ausziehweg begrenzenden Ausziehanschlag (12) zusammenwirkt, **dadurch gekennzeichnet, dass** das Gleitstück (4) auf der der offenen Gehäuseseite gegenüberliegenden Längsseite den in eine Gehäusenut (13) eingreifenden und mit der Stirnseite der Gehäusenut als Gegenanschlag (14) zusammenwirkenden Ausziehanschlag (12) aufweist.

2. Federscharnier nach Anspruch 1, **dadurch gekennzeichnet, dass** der Ausziehanschlag (12) am dornseitigen Ende des Gleitstücks (4) vorgesehen ist.

3. Federscharnier nach Anspruch 1 oder 2, **dadurch gekennzeichnet, dass** die parallelen Führungsflächen (3) der Gehäuseführung durch eine Quernut (15) unterbrochen sind, die den stirnseitigen Gegenanschlag (14) der Gehäusenut (12) bildet.
